# EUROPÄISCHE PATENTSCHRIFT

(11) **EP 0 612 557 B1**
(45) Veröffentlichungstag und Bekanntmachung des Hinweises auf die Patenterteilung: **21.05.1997**
(21) Anmeldenummer: 94100847.6
(22) Anmeldetag: 21.01.1994
(51) Int. Cl.: B01F 3/12

(54) **Verfahren und Vorrichtung zur gleichmässigen Verteilung einer kleinen Menge Flüssigkeit auf Schüttgütern**
Method and device for uniformly distributing a small amount of liquid on bulk goods
Procédé et dispositif pour la distribution uniforme d'une petite quantité de liquide sur des matériaux en vrac

(30) Priorität: 25.02.1993 DE 4305713
(43) Veröffentlichungstag der Anmeldung: 31.08.1994
(73) Patentinhaber: HOECHST AKTIENGESELLSCHAFT, 65929 Frankfurt am Main (DE)
(72) Erfinder: Heffels, Stefan, Dr., D-65817 Eppstein (DE); Hartel, Johannes, D-65812 Bad Soden am Taunus (DE); Nöltner, Gerhard, D-65929 Frankfurt (DE); Mischke, Peter, Dr., D-65812 Bad Soden/Taunus (DE)

(56) Entgegenhaltungen:
- EP-A- 0 225 237
- FR-A- 2 026 912
- FR-E- 74 217
- GB-A- 1 008 805
- GB-A- 1 015 962

## Beschreibung

Eine gleichmäßige Verteilung einer kleinen Menge eines flüssigen Hilfsmittels auf Granulaten und feinteiligen Feststoffen kann beispielsweise zur Steigerung der Löslichkeit, zur Beschleunigung von Reaktions- und Dissoziationsvorgängen nach einer Suspendierung in Lösung, zur Verbesserung der Dispergierbarkeit, der Fließeigenschaften, der optischen Eigenschaften sowie zur Verbesserung des Geschmackes und Geruches, zum Schutz vor Feuchtigkeit, Sauerstoff, bakteriellem oder Pilz-Befall oder zum Binden von Staub vorgenommen werden. Besonders bei Farbstoffgranulaten und Farbstoffpulvern bekommen Staubfreiheit und Rieselverhalten als Qualitätsmerkmale eine steigende Bedeutung.

Die Verarbeitung eines flüssigen Hilfsmittels hat gegenüber einem Hilfsmittel in fester Form den Vorteil, daß flüssige Hilfsmittel leichter zu verteilen sind und daß sie durch die Möglichkeit der Verdünnung in kleinsten Konzentrationen kontrolliert aufgetragen werden können.

Statt dem Granulat oder dem Pulver homogen ein flüssiges Hilfsmittel unterzumischen, kann mit einer nachträglichen Beschichtung durch Aufsprühen der gleiche Effekt mit einer geringeren Menge an flüssigem Hilfsmittel erreicht werden. Auch aus Gründen der Produktreinheit und Kostenminimierung ist man bestrebt, möglichst kleine Mengen an flüssigen Hilfsmitteln zur Beschichtung einzusetzen und diese möglichst gleichmäßig zu verteilen.

Bei allen Anwendungen ist die Qualität der Beschichtung abhängig von der Dosierung der eingesetzten Stoffe, der Anordnung und Konstruktion der Zugabevorrichtung, der Verteilung des Beschichtungsmittels, dem Mischen und dem Homogenisieren des zu behandelnden Schüttgutes.

In vielen bekannten Apparaten wird in einer Wirbelschicht gleichzeitig oder in Abschnitten granuliert, getrocknet und beschichtet. Zum Eintragen und gleichmäßigen Verteilen eines flüssigen Hilfsmittels werden bevorzugt Düsen verwendet. Die kleinsten Einstoffdüsen benötigen für eine wirksame und gleichmäßige Zerstäubung einen Durchsatz von mindestens 0,014 l/h. Bei diesem Durchsatz hat die Düse eine Bohrung von 0,1 mm und benötigt einen Flüssigkeitsdruck von mindestens 5 bar bei Wasser. Düsen mit dieser Bohrung sind äußerst empfindlich gegen feste Verunreinigungen. Flüssigkeiten mit höherer Viskosität benötigen einen entsprechend höheren Flüssigkeitsdruck. Für kleine Durchsätze werden daher bevorzugt Zwei- und Dreistoffdüsen eingesetzt. Der Nachteil bei allen diesen Mehrstoffdüsen ist jedoch, daß ein Zerstäubergasstrom als Abluft entsteht. Mit der entstehenden Abluft entweicht auch oft ein Teil des flüssigen Hilfsmittels dampfförmig oder in Form feinster Tröpfchen. In vielen Fällen bilden sich dadurch Ablagerungen an den Rohrleitungen zum Filter oder Gaswäscher. Manchmal führen diese Ablagerungen von Öl und Staub zu einer Verstopfung der Filter. Beispielsweise wurde durch eine Analyse festgestellt, daß beim Aufsprühen von Hexylenglykol auf Granulate in einer Wirbelschicht bis zu 30 % des eingesetzten Hexylenglykols am Granulat vorbei in die Abluft gelangen.

In den Fällen, in denen nur größere Mengen, als für die Behandlung des Schüttgutes erforderlich, versprüht werden konnten, war eine taktweise Zugabe vorgesehen. Beim An- und Abfahren der Einstoffdüsen bildete sich häufig ein flackerndes Sprühbild mit ungleichmäßiger Verteilung. Dabei war die anschließende Mischzeit und Mischintensität ausreichend lang zu wählen. Häufig bildeten sich Agglomerate und Verklumpungen. Dies wiederum erforderte ein Absieben des behandelten Schüttgutes.

Die Aufgabe der vorliegenden Erfindung bestand darin, ein Verfahren und eine Vorrichtung zur gleichmäßigen Verteilung einer kleinen Menge Flüssigkeit auf Schüttgütern zur Verfügung zu stellen, die die genannten Nachteile des Standes der Technik überwinden.

Es wurde gefunden, daß bei Einsatz einer Ultraschalldüse in Kombination mit einem Mischer überraschenderweise eine besonders gleichmäßige Verteilung von Flüssigkeiten auf die Oberfläche von feinteiligen Feststoffen erzielt wird, wobei der Einsatz einer sehr kleinen Menge des flüssigen Hilfsmittels genügt, um das gewünschte Eigenschaftsbild der behandelten Feststoffpartikel zu erhalten.

Gegenstand der vorliegenden Erfindung ist ein Verfahren zur gleichmäßigen Verteilung einer kleinen Menge Flüssigkeit auf die Oberfläche von feinteiligen Feststoffen, dadurch gekennzeichnet, daß die besagte Flüssigkeit mittels einer oder mehrerer Ultraschalldüse(n) auf den zu behandelnden feinteiligen Feststoff aufgesprüht wird, bevor oder während, oder bevor und während, der besagte Feststoff in einer Mischvorrichtung vermischt wird.

Die Teilchen- oder Partikelgröße der feinteiligen Feststoffe kann beliebig sein; beispielsweise kann das erfindungsgemäße Verfahren auf Granulate, Pulver oder Stäube angewendet werden.

Im Falle, daß das flüssige Hilfsmittel zur Entstaubung eingesetzt wird, werden auch durch Abrieb oder Bruch entstandene feinkörnige Teilchen gebunden, da das an der Oberfläche der Teilchen befindliche flüssige Hilfsmittel eine klebende Wirkung ausübt. Zweckmäßig ist es jedoch, den Staubanteil durch optimale Granulation und gezielte Staubabtrennung, z.B. durch Sichten oder Sieben, bereits vor der Sprühbehandlung zu minimieren.

Feinteilige Feststoffe, die nach dem erfindungsgemäßen Verfahren behandelt werden können, sind beispielsweise Farbstoffgranulate, Farbstoffpulver, Pflanzenschutzmittel, Pharmazeutika, Waschmittel, Waschmittelzusatzstoffe, Waschhilfsmittel, Produkte für die Tiergesundheit, keramische Produkte, Saatgut, Streusalz, Streugut, Nahrungsmittel, Konservierungsmittel und Haarfärbemittel.

Die auf den feinteiligen Feststoff aufgesprühte Flüssigkeit kann ein Mineralöl, ein pflanzliches Öl oder eine Mischung pflanzlicher Öle, vorzugsweise bei Raumtemperatur flüssige pflanzliche Öle, ein Glykol, vorzugsweise Diethylenglykol oder Hexylenglykol, ein Oxalkylat, vorzugsweise ein Ethylenoxid-Polymerisat, ein Propylenoxid-Polymerisat oder ein Ethylenoxid-Propylenoxid-Blockpolymerisat, Glycerin, ein Glycerinether, ein Glykolether, vorzugsweise Fettalkoholpolyglykolether, ein Fettamin, beispielsweise Dialkyllaurylamin, oder eine Mischung aus einer oder mehreren der vorstehend genannten Flüssigkeiten sein.

Auch eine Öl-Wasser-Emulsion, beispielsweise eine Mineralölemulsion, eine Schmelze, eine wäßrige Lösung oder eine Dispersion einer zur Oberflächenbeschichtung geeigneten Verbindung, beispielsweise ein Acrylat, ein Farbstoff oder eine katalytisch wirksame Substanz, in einer oder mehreren der genannten Flüssigkeiten können nach dem erfindungsgemäßen Verfahren versprüht werden. Anstelle von Wasser kann auch ein organisches Lösungsmittel verwendet werden. Aus ökologischen Gründen ist jedoch Wasser bevorzugt. Wird eine Dispersion versprüht, muß die Partikelgröße der dispergierten Feststoffe kleiner als 500 µm, vorzugsweise kleiner als 100 µm, sein, damit die Ultraschalldüse nicht verstopft. Beispielsweise kann eine Dispersion oder Lösung eines Fungizids, Bakterizids oder Insektizids auf einen Feststoff aufgesprüht werden, der vor Pilz-, Bakterien- oder Schädlingsbefall geschützt werden soll.

Weitere Beispiele von Verbindungen, die vorzugsweise als wäßrige Lösung nach dem erfindungsgemäßen Verfahren versprüht werden, sind Polyvinylalkohol, Carboxymethylcellulose, Methylcellulose, Alginat, Celluloseacetat, Monochloressigsäureethylester, Polyvinylacetat, Polyvinylidenchlorid, Polyvinylpyrrolidon, Antioxidantien wie Ascorbinsäureester, Antireizstoffe wie Fettsäurealkylolamide, Antistatika wie Fettaminoxide, Aromen, optische Aufheller, Zusatzstoffe für Badepräparate, Chelatbildner wie Aminopolycarbonsäuren, Desinfektionsmittel, Dispergiermittel wie Sojalecithin, Dragierlacke für Tabletten, amphotere, anionische, kationische oder nichtionische Emulgatoren wie Fettaminsalze, Fettalkohole, die ethoxyliert oder propoxyliert sein können, Fettsäurealkylamide, Fettsäureester oder Fettsäuren, Filmbildner, Gelbildner, Geruchüberdeckungsmittel, Haarkonditioniermittel, Harze, Konservierungsmittel, Korrosionsinhibitoren, Lecithine, Lösevermittler, Netzmittel, Entschäumer, Süßstoffe, Süßungsmittel, Tablettenhilfsstoffe, Verdickungsmittel, Wachse, Waschrohstoffe und Weichmacher.

Die zu dem erfindungsgemäßen Zweck erforderliche Menge der auf die Oberfläche des feinteiligen Feststoffes aufzusprühenden Flüssigkeit beträgt 0,001 bis 15 Gew.-%, vorzugsweise 0,01 bis 1 Gew.-%, bezogen auf das Gewicht des eingesetzten feinteiligen Feststoffes. Das flüssige Hilfsmittel kann bei einer Temperatur von 0 bis 100°C, vorzugsweise bei 20 bis 40°C, aufgebracht werden. Die vorstehend genannten flüssigen Hilfsmittel können einzeln, als Mischung miteinander oder als Mischung mit Wasser oder einem organischen Lösungsmittel versprüht werden. Das Aufbringen einer größeren Menge des flüssigen Hilfsmittels als vorstehend angegeben ist technisch möglich, aber unzweckmäßig, da das Rieselverhalten und die Fließeigenschaften der so behandelten Schüttgüter beeinträchtigt werden.

Gegenstand der vorliegenden Erfindung ist auch eine Vorrichtung zum gleichmäßigen Verteilen einer kleinen Menge Flüssigkeit auf die Oberfläche von feinteiligen Feststoffen, dadurch gekennzeichnet, daß eine oder mehrere Ultraschalldüse(n) mit einer Mischvorrichtung kombiniert ist/sind.

Als Ultraschalldüsen kommen herkömmliche Ultraschallzerstäuber in Betracht, die einen Durchsatz der Behandlungsflüssigkeit zwischen 2 g/h und 100 kg/h, vorzugsweise zwischen 20 g/h und 800 g/h, haben.

Ein herkömmlicher für den erfindungsgemäßen Zweck geeigneter Ultraschallzerstäuber besteht aus drei Teilen: einem Oszillator, einem elektromechanischen Wandler und einem Flüssigkeitsbehälter für die zu versprühende Flüssigkeit. Im elektromechanischen Wandler werden aus den elektrischen Wellen, die im Oszillator erzeugt werden, mittels piezokeramischer Elemente mechanische Schwingungen erzeugt. Dadurch wird die Oberfläche der Sprühflüssigkeit zu feinsten Kapillarwellen angeregt, auf denen Tröpfchen abgeschnürt und in parabelförmigen Flugbahnen weggeschleudert werden. Dazu muß der Flüssigkeitsfilm mit einer bestimmten Schichtdicke auf der Zerstäuberoberfläche verteilt werden. Die Flüssigkeitsnachführung erfolgt drucklos. Die maximale Sprühmenge kann bis zu 100 l/h betragen. Die Arbeitsfrequenz liegt im niederen Ultraschallbereich zwischen 20 und 100 Kilohertz.

Ultraschallzerstäuber gibt es in verschiedenen konstruktiven Ausführungsformen, z.B. als axiale oder als zirkulare Ultraschallzerstäuber. Für das erfindungsgemäße Verfahren bevorzugt ist ein Ultraschall-Axialzerstäuber, der einen Flüssigkeitsstrahl in Form eines schlanken Vollkegels mit einem Winkel von 10 bis 200°, vorzugsweise 10 bis 50°, insbesondere 10 bis 20°, erzeugt, bei einer Frequenz von 20 bis 100 kHz, vorzugsweise bei 60 kHz, arbeitet und ein Tropfenspektrum erzeugt, dessen Maximum der relativen Häufigkeitsverteilung zwischen 15 und 25 µm liegt.

Als Mischvorrichtungen kommen mechanische oder pneumatische Mischer in Betracht. Als mechanische Mischer sind solche bevorzugt, bei denen keine Gase abgeblasen oder abgesogen werden. Handelsübliche Mischer gibt es in der Form, daß der Schüttgut-Behälter um ein oder mehrere Achsen rotiert, beispielsweise ein Drehrohrmischer, ein Taumeltrockner, ein Doppelkonustrockner oder ein V-Mischer. Die Behälter können auch feststehen und die Feststoffdurchmischung wird durch bewegte Mischwerkzeuge verursacht, beispielsweise ein Schugi-Mischer, ein Turbulent-Mischer oder ein Pflugschar-Mischer. Aber auch pneumatische Mischer wie z.B. ein Airmix-Mischer, sind für den Zweck der vorliegenden Erfindung geeignet. Besonders bevorzugt sind Drehrohrmischer, Turbulent-Mischer und Pflugscharmischer.

Die Betriebsweise des Mischers kann diskontinuierlich oder vorteilhafterweise kontinuierlich erfolgen.

Die Ultraschalldüse kann im Bereich des Mischereinlaufs angebracht werden, um eine möglichst kompakte Bauart zu erhalten. Besonders im Fall von kontinuierlich arbeitenden Mischern kann die Ultraschalldüse auch in einem Zulaufrohr, auf einer Dosierrinne, auf einem Förderband oder auf einem Trichter montiert sein, um von oben nach unten gerichtet aufzusprühen. Besonders im Fall von diskontinuierlichem Betrieb ist es zweckmäßig, die Ultraschalldüse im Innenraum des Mischers in größtmöglichem Abstand zu den Mischwerkzeugen und den Gefäßwänden anzubringen.

Die Beschickung der Ultraschalldüse mit der Behandlungsflüssigkeit kann durch eine geeignete druckerzeugende Vorrichtung, beispielsweise durch eine Pumpe, vorzugsweise eine Schlauchpumpe, Zahnradpumpe, Kolbenpumpe, oder allein über ein Druckgefäß durch hydrostatischen Druck erfolgen, wobei die Flüssigkeit der Düse drucklos zuläuft und lediglich der Druckverlust in der Zuleitung zu überwinden ist.

Die Eindosierung des zu behandelnden Feststoffes in den Mischer erfolgt beispielsweise durch einen Schwingförderer, Schneckenförderer, Drehteller, Drehrohrförderer, Bandförderer, Zellenradförderer oder eine andere geeignete Dosiervorrichtung.

Gegenstand der vorliegenden Erfindung ist auch die Verwendung einer Ultraschalldüse in Kombination mit einer Mischvorrichtung zur gleichmäßigen Verteilung einer kleinen Menge Flüssigkeit auf die Oberfläche von feinteiligen Feststoffen.

Durch das erfindungsgemäße Verfahren ist es möglich, die erforderlichen Mengen des zu versprühenden flüssigen Hilfsmittels gegenüber dem Stand der Technik signifikant zu verringern. Dadurch werden erhebliche Kosten eingespart und die Umweltbelastung minimiert. Diese Vorteile wurden bei den bisher üblichen Anwendungen einer Ultraschalldüse nicht erkannt.

Bei einem Vergleich zwischen der Verwendung einer Ultraschalldüse und einer herkömmlichen Zweistoffdüse ergeben sich für die Ultraschalldüse weitere Vorteile:
- auf ein Zerstäubergas kann verzichtet werden, wodurch Abluftprobleme vermieden werden;
- die Ultraschalldüse kann im Gegensatz zur Zweistoffdüse ohne grobe Tropfenbildung an- und abgefahren werden;
- eine Bartbildung unterbleibt, da sich die Ultraschalldüse durch den Schwingkörper selbst reinigt;
- die bessere Verteilung kleinster Mengen erlaubt eine Verkürzung der Mischzeit und Einsparung an Kosten bei der weiteren Nachbehandlung der Partikel, beispielsweise schnellere Löslichkeit;
- die bessere Verteilung führt zu einer Steigerung der Produktqualität und Reinheit.

Die folgenden Beispiele dienen der Erläuterung der Erfindung und stellen keine Beschränkung dar. Prozentangaben bedeuten Gewichtsprozente.

Der Begriff "Filterwert" ist eine Bewertung des Staubverhaltens von Farbstoffen. Beurteilt wird die Verfärbung eines Filters in der Absaugleitung eines Behälters, in den von ca. 1 m Höhe durch ein Fallrohr eine Menge von 10 g eines Farbstoffgranulats gefallen ist. Dieses Meßgerät ist unter Farbenherstellern normiert. Ein Filterwert von 5 bedeutet staubfrei, 1 dagegen stark staubend (Berger-Schunn, et al., Melliand Textilberichte 9 (1989) 690-692 und Textilveredlung, 24 (1989), 277-289). Die in den Beispielen eingesetzte Ultraschalldüse ist ein Ultraschall-Axialzerstäuber mit einer Gesamtbaulänge von 35 mm, der einen Flüssigkeitsstrahl in Form eines schlanken Vollkegels mit einem Winkel von 15° erzeugt, bei einer Frequenz von 60 kHz arbeitet und ein Tropfenspektrum erzeugt, dessen Maximum der relativen Häufigkeitsverteilung bei 20 µm liegt.

### Beispiel 1: Entstaubung von Farbstoffen in einem Zig-Zag-Mischer

Die in der nachfolgenden Tabelle aufgeführten Farbstoffgranulate wurden mit Hexylenglykol als Entstaubungsmittel behandelt. Die eingesetzten Farbstoffe waren getrocknet, granuliert und in einem Fluid Spray Drier gesichtet.

Ein handelsüblicher Drehrohr (Zig-Zag)-Mischer wurde konstruktiv geändert. Die ursprünglich vorgesehenen, messerförmigen Mischwerkzeuge in der Vorkammer wurden entfernt. An deren Stelle wurde eine Ultraschalldüse montiert. Die Düse wurde mit einer Schlauchpumpe beschickt, um auch kleine Durchsätze in der Größenordnung von 10 g/h zu realisieren. Die Eindosierung des Farbstoffgranulats in den Zig-Zag-Mischer erfolgte mit einem Schwingförderer (ca. 100 kg/h) durch eine geneigte Rohrleitung. Die Drehzahl des Mischers betrug 0,32 /s.

Der Belag auf dem Kopf der Düse sowie an der Wand des Mischers war locker und trocken. Er baute sich während der Versuchszeit nicht auf.

Die Filterwerte wurden anhand von 10 g Proben, die zu unterschiedlichen Zeiten am Ausgang des Mischers gezogen wurden, bestimmt. Es fiel überraschend auf, daß der Filterwert von mehreren Proben ein und desselben Farbstoffes gleich war. Das wiederum bestätigt die Gleichmäßigkeit, mit der kleinste Mengen Flüssigkeit auf ein Granulat gesprüht werden konnten. Auch ein Absieben von großen Agglomeraten oder Klumpen war nicht mehr notwendig.

Die folgenden Mengen Hexylenglykol, bezogen auf das Gesamtgewicht des Schüttguts reichten aus, um freifließende staubarme bis staubfreie Granulate herzustellen:

**Tabelle 1**

| Entstaubung von Farbstoffen mittels Ultraschalldüse | | | | |
|---|---|---|---|---|
| Farbstoffgranulat | Filterwert | | Hexylenglykolgehalt % | Durchsatz durch die Ultraschalldüse g/h |
| | vor | nach | | |
| | dem Besprühen | | | |
| a) Farbstoff der nachstehenden Formel | 2 | 3 | 1,0 | 760 |
| b) Farbstoff, bekannt aus EP-A-0 028 788, Bsp. 1 | 3 | 4-5 | 0,5 | 390 |
| c) C.I. Reactive Blue 19 | 3-4 | 5 | 0,011 | 20 |
| d) Farbstoff, bekannt aus EP-A-0 032 187, Bsp. 1 | 3-4 | 5 | 0,011 | 20 |

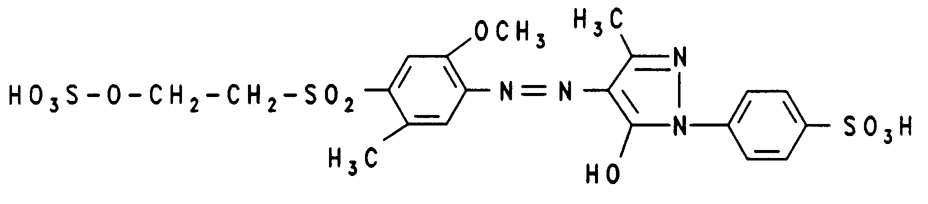

### Vergleichsbeispiel 1: Zerstäuberscheibe in einem V-Mischer

a) 3,5 kg des aus EP-A-0 032 187, Beispiel 1, bekannten Farbstoffs, (granuliert) wurden in einem V-Mischer (Inhalt 10 l) mit 1 % Hexylenglykol befeuchtet. Der Filterwert des eingesetzten Produktes betrug 2-3. Die Flüssigkeit trat durch eine Hohlwelle und einen Ringspalt von 0,2 mm zwischen zwei aufgesetzten Flanschen in den Behälter. Die Welle drehte mit 15/s und der Behälter mit 0,5 /s. Auf der Welle befanden sich kleine Flügelmesser, die bei der hohen Drehgeschwindigkeit eine Turbulenz erzeugten und die Durchmischung beschleunigten. Der V-Mischer hat durch seine ähnliche Konstruktion die gleiche Mischtechnik wie ein Zig-Zag-Mischer. Es bildeten sich im Versuch einige Klumpen von etwa 1 cm Größe. Der Filterwert war nach der Behandlung 2-3 und hatte sich kaum verbessert. Auch eine Variation in der Mischzeit zwischen 3 und 12 Minuten brachte keine wesentliche Verbesserung.
b) Bei der Behandlung eines C.I. Reactive Blue 19 - Granulates konnte beim Einsatz von nur 0,5 % Hexylenglykol die Klumpenbildung zwar vermieden werden, aber der Filterwert verbesserte sich nur unwesentlich von 2-3 auf 3.

### Vergleichsbeispiel 2: Zweistoffdüse in einer Wirbelschicht

Verschiedene Farbstoffgranulate wurden auf einer Wirbelschicht von 0,3 m² und einer Wirbelschichthöhe von 0,11 m (Schüttguthöhe von 0,07 m) durch Aufsprühen von Hexylenglykol mittels einer Zweistoffdüse befeuchtet. Die Verweilzeit betrug ca. 20 min, die Gaseintrittstemperatur 26°C. Der Feststoffdurchsatz betrug 30 kg/h. Zur Verbesserung des Filterwertes von 3-4 auf 5 waren für C.I. Reactive Blue 19 1,5 Gew.-% Hexylenglykol und für den aus EP-A-0 032 187 bekannten Farbstoff waren 2 Gew.-% Hexylenglykol (600 g/h) notwendig. Die Rieselfähigkeit war deutlich schlechter als bei einer Behandlung nach Beispiel 1. Auch die benötigte Menge an Hexylenglykol war um ein Vielfaches größer als mit einer Ultraschalldüse nach Beispiel 1.

### Vergleichsbeispiel 3: Zweistoffdüse in einem Zig-Zag-Mischer

In der gleichen Anordnung wie im Beispiel 1 wurde C.I. Reactive Blue 19 mittels einer Zweistoffdüse der Fa. Schlick sowie in einem weiteren Versuch mittels einer Zweistoffdüse der Fa. Lechler mit Hexylenglykol entstaubt. Zur Erzielung eines Filterwertes 5 war ein Beölungsgrad von 0,024 % (0,055 kg/h) notwendig. Die Menge ist doppelt so groß wie mittels einer Ultraschalldüse (s. Tabelle 1).

Handelsübliche Zweistoffdüsen haben den Nachteil, daß die aufzusprühende Flüssigkeit mit dem Sprühgas aus dem Schüttgut, besonders aus feinteiligen Schüttgütern, ausgetragen wird.

### Beispiel 2: Entstaubung von Farbstoffen in einem Fallrohr mit einer Schmelze

Die Besprühung wurde in einem 8''-Zig-Zag-Mischer ohne Zerhacker und mit einer Ultraschalldüse durchgeführt. Um einen gleichmäßigen Austrag und Mischvorgang zu erreichen, wurde der Mischer um 2,4° auf der Seite des Eintrags angehoben. Die Düse wurde in einem senkrechten Einleitrohr vor der Trommel des Mischers, ca. 100 cm oberhalb des Bogens, in den Einlauf montiert.

Die Entstaubung eines Reaktivfarbstoffgranulates erfolgte durch einen Fettalkoholpolyglykolether, der einen Schmelzpunkt über 60°C hat. Bei einer Drehzahl von 0,32 /s und bei einem Granulatdurchsatz von ca. 80 kg/h wurden 20 g/h des Fettalkoholpolyglykolethers mit einer Temperatur von 90°C eingetragen. Nach einer sogenannten Heißentstaubung im Zig-Zag-Mischer wurde das Produkt bei 65°C ausgetragen. Der Filterwert verbesserte sich von 3 auf 4, das heißt es wurde ein praktisch staubfreies Granulat erhalten.

## Patentansprüche

1. Verfahren zur gleichmäßigen Verteilung einer kleinen Menge Flüssigkeit auf die Oberfläche von feinteiligen Feststoffen, dadurch gekennzeichnet, daß die besagte Flüssigkeit mittels einer oder mehrerer Ultraschalldüse(n) auf den zu behandelnden feinteiligen Feststoff aufgesprüht wird, bevor oder während, oder bevor und während, der besagte Feststoff in einer Mischvorrichtung vermischt wird.

2. Verfahren nach Anspruch 1, dadurch gekennzeichnet, daß der feinteilige Feststoff ein Farbstoffgranulat oder Farbstoffpulver ist.

3. Verfahren nach Anspruch 1 oder 2, dadurch gekennzeichnet, daß die aufgesprühte Flüssigkeit ein Mineralöl, ein pflanzliches Öl, ein Glykol, ein Oxalkylat, Glycerin, ein Glykolether, ein Glycerinether, ein Fettamin oder eine Mischung besagter Flüssigkeiten ist.

4. Verfahren nach mindestens einem der Ansprüche 1 bis 3, dadurch gekennzeichnet, daß die aufgesprühte Flüssigkeit Diethylenglykol, Hexylenglykol oder ein Fettalkoholpolyglykolether ist.

5. Verfahren nach mindestens einem der Ansprüche 1 bis 3, dadurch gekennzeichnet, daß die aufgesprühte Flüssigkeit eine Öl-Wasser-Emulsion, vorzugsweise eine Mineralölemulsion, ist.

6. Verfahren nach mindestens einem der Ansprüche 1 bis 4, dadurch gekennzeichnet, daß die aufgesprühte Flüssigkeit eine wäßrige Lösung, eine Dispersion oder eine Schmelze einer zum Verteilen auf die Oberfläche von feinteiligen Feststoffen vorgesehenen Verbindung ist.

7. Verfahren nach mindestens einem der Ansprüche 1 bis 6, dadurch gekennzeichnet, daß die Menge der auf die Oberfläche des feinteiligen Feststoffes aufzusprühenden Flüssigkeit 0,001 bis 15 Gew.-%, vorzugsweise 0,01 bis 1 Gew.-%, bezogen auf das Gewicht des eingesetzten Feststoffes beträgt.

8. Vorrichtung zum gleichmäßigen Verteilen einer kleinen Menge Flüssigkeit auf die Oberfläche von feinteiligen Feststoffen, dadurch gekennzeichnet, daß mindestens eine Ultraschalldüse mit einem mechanischen oder pneumatischen Mischer kombiniert ist.

9. Vorrichtung nach Anspruch 8, dadurch gekennzeichnet, daß die Ultraschalldüse einen Durchsatz zwischen 2 g/h und 100 kg/h, vorzugsweise zwischen 20 g/h und 800 g/h, hat.

10. Vorrichtung nach Anspruch 8 oder 9, dadurch gekennzeichnet, daß als Ultraschalldüse ein Ultraschall-Axialzerstäuber eingesetzt wird, der einen Flüssigkeitsstrahl in Form eines schlanken Vollkegels mit einem Winkel von 10 bis 200°, vorzugsweise 10 bis 50°, insbesondere 10 bis 20°, erzeugt, bei einer Frequenz von 20 bis 100 kHz, vorzugsweise bei 60 kHz, arbeitet und ein Tropfenspektrum erzeugt, dessen Maximum der relativen Häufigkeitsverteilung zwischen 15 und 25 µm liegt.

11. Vorrichtung nach mindestens einem der Ansprüche 8 bis 10, dadurch gekennzeichnet, daß mindestens eine Ultraschalldüse im Bereich des Mischereinlaufs angebracht ist.

12. Vorrichtung nach mindestens einem der Ansprüche 8 bis 11, dadurch gekennzeichnet, daß mindestens eine Ultraschalldüse im Innenraum des Mischers in größtmöglichem Abstand zu den Mischwerkzeugen und den Gefäßwänden angebracht ist.

13. Verwendung einer Ultraschalldüse in Kombination mit einer Mischvorrichtung zur gleichmäßigen Verteilung einer kleinen Menge Flüssigkeit auf die Oberfläche von feinteiligen Feststoffen.

## Claims

1. A method for the uniform distribution of a small amount of liquid onto the surface of finely particulate solids, which comprises spraying said liquid by means of at least one ultrasonic nozzle onto the finely particulate solid to be treated, before or while, or before and while, said solid is mixed in a mixing appliance.

2. The process as claimed in claim 1, wherein the finely particulate solid is a granular dye or dye powder.

3. The process as claimed in claim 1 or 2, wherein the sprayed-on liquid is a mineral oil, a vegetable oil, a glycol, an alkoxylate, glycerol, a glycol ether, a glycerol ether, a fatty amine or a mixture of said liquids.

4. The process as claimed in at least one of claims 1 to 3, wherein the sprayed-on liquid is diethylene glycol, hexylene glycol or a fatty alcohol polyglycol ether.

5. The process as claimed in at least one of claims 1 to 3, wherein the sprayed-on liquid is an oil-water emulsion, preferably a mineral oil emulsion.

6. The process as claimed in at least one of claims 1 to 4, wherein the sprayed-on liquid is an aqueous solution, a dispersion or a melt of a compound intended to be distributed onto the surface of finely particulate solids.

7. The process as claimed in at least one of claims 1 to 6, wherein the amount of the liquid to be sprayed onto the surface of the finely particulate solid is from 0.001 to 15 % by weight, preferably from 0.01 to 1 % by weight, based on the weight of the solid employed.

8. An appliance for the uniform distribution of a small amount of liquid onto the surface of finely particulate solids, wherein at least one ultrasonic nozzle is combined with a mechanical or pneumatic mixer.

9. The appliance as claimed in claim 8, wherein the ultrasonic nozzle has a throughput of from 2 g/h to 100 kg/h, preferably from 20 g/h to 800 g/h.

10. The appliance as claimed in claim 8 or 9, wherein the ultrasonic nozzle employed is an ultrasonic axial atomizer which generates a liquid jet in the form of a slender solid cone having an angle of from 10 to 200°, preferably from 10 to 50°, in particular from 10 to 20°, operates at a frequency of from 20 to 100 kHz, preferably at 60 kHz, and generates a droplet spectrum whose maximum of the relative frequency distribution is between 15 and 25 µm.

11. The appliance as claimed in at least one of claims 8 to 10, wherein at least one ultrasonic nozzle is arranged in or near the mixer inlet.

12. The appliance as claimed in at least one of claims 8 to 11, wherein at least one ultrasonic nozzle is arranged in the interior of the mixer at as large a distance as possible from the mixing tools and the vessel walls.

13. The use of an ultrasonic nozzle in combination with a mixing appliance for the uniform distribution of a small amount of liquid onto the surface of finely particulate solids.

## Revendications

1. Procédé pour répartir uniformément une petite quantité de liquide sur la surface de substances solides finement divisées, caractérisé en ce qu'on pulvérise ledit liquide, à l'aide d'une ou de plusieurs buses à ultrasons, sur la substance solide finement divisée à traiter, avant ou pendant ou avant et pendant le mélange de ladite substance solide dans un dispositif mélangeur.

2. Procédé selon la revendication 1, caractérisé en ce que la substance solide finement divisée est constituée de granulés de colorants ou d'une poudre de colorant.

3. Procédé selon la revendication 1 ou 2, caractérisé en ce que le liquide pulvérisé est une huile minérale, une huile végétale, un glycol, un oxalkylate, de la glycérine, un ester glycolique, un éther de glycérine, une amine grasse ou un mélange desdits liquides.

4. Procédé selon au moins l'une des revendications 1 à 3, caractérisé en ce que le liquide pulvérisé est du diéthylèneglycol, de l'héxylèneglycol ou un polyglycoléther d'alcool gras.

5. Procédé selon au moins l'une des revendications 1 à 3, caractérisé en ce que le liquide pulvérisé est une émulsion huile - eau, de préférence une émulsion d'huile minérale.

6. Procédé selon au moins l'une des revendications 1 à 4, caractérisé en ce que le liquide pulvérisé est une solution aqueuse, une dispersion ou la masse fondue d'un composé destiné à être réparti sur la surface de substances solides finement divisées.

7. Procédé selon au moins l'une des revendications 1 à 6, caractérisé en ce que la quantité du liquide pulvérisé sur la surface de la substance solide finement divisée est comprise entre 0,001 et 15% en poids, de préférence entre 0,01 et 1% en poids, rapportés au poids de la substance solide utilisée.

8. Dispositif pour répartir uniformément une petite quantité d'un liquide sur la surface de substances solides finement divisées, caractérisé en ce qu'au moins une buse à ultrasons est combinée à un mélangeur mécanique ou pneumatique.

9. Dispositif selon la revendication 8, caractérisé en ce que la buse à ultrasons possède un débit compris entre 2 g/h et 100 kg/h, de préférence entre 20 g/h et 800 g/h.

10. Dispositif selon la revendication 8 ou 9, caractérisé en ce qu'on utilise comme buse à ultrasons un pulvérisateur axial à ultrasons, qui produit un jet de liquide sous la forme d'un cône plein élancé ayant un angle de 10 à 200°, de préférence de 10 à 50°, notamment de 10 à 20°, travaille à une fréquence de 20 à 100 kHz, de préférence à 60 kHz, et produit un spectre de gouttes dont le maximum de la distribution relative de fréquence est compris entre 15 et 25 µm.

11. Dispositif selon au moins l'une des revendications 8 à 10, caractérisé en ce qu'au moins une buse à ultrasons est disposée au niveau de l'entrée du mélangeur.

12. Dispositif selon au moins l'une des revendications 8 à 11, caractérisé en ce qu'au moins une buse à ultrasons est disposée dans l'espace intérieur du mélangeur à la distance maximale possible des outils de mélange et des parois du récipient.

13. Utilisation d'une buse à ultrasons en combinaison avec un dispositif de mélange pour répartir uniformément une petite quantité de liquide sur la surface de substances solides finement divisées.
